# EUROPEAN PATENT APPLICATION

(11) **EP 4 836 177 A1**
(43) Date of publication of application: **04.11.2026**
(21) Application number: 24914816.4
(22) Date of filing: 12.08.2024
(51) Int. Cl.: H01M 50/552, H01M 50/567

(54) **HOUSING ASSEMBLY, BATTERY CELL, BATTERY, AND ELECTRICAL DEVICE**

(30) Priority: 02.01.2024 CN 202420003437 U
(71) Applicant: Contemporary Amperex Technology Co., Limited, Ningde, Fujian 352100 (CN)
(72) Inventor: PAN, Youcheng, Ningde, Fujian 352100 (CN); HUANG, Biao, Ningde, Fujian 352100 (CN); JIANG, Liang, Ningde, Fujian 352100 (CN); YU, Mingxi, Ningde, Fujian 352100 (CN)
(74) Representative: Gong, Jinping
(86) International application number: PCT/CN2024/111491
(87) International publication number: WO 2025/145594

(57) **Abstract**

Disclosed are a housing assembly (21), a battery cell (20), a battery (100), and an electrical device. The housing assembly (21) comprises a housing (211) and a terminal (212), wherein a hole (211a) is provided in the housing (211); and the terminal (212) comprises a main body portion (201), a connecting portion (202), and a bent portion (203), the main body portion (201) being located inside the housing (211), the connecting portion (202) passing through the hole (211a) and connecting the main body portion (201) and the bent portion (203), the bent portion (203) being located outside the housing (211), the bent portion (203) having an end portion close to the connecting portion (201), and a recess (212a) being provided on the side of the end portion close to the housing (211).

## Description

### CROSS-REFERENCE TO RELATED APPLICATION

The present application is based on Chinese Patent Application No. 202420003437.X filed on January 2, 2024, and claims the priority to this Chinese Patent Application, the content of which is incorporated herein by reference in its entirety.

### TECHNICAL FIELD

The present application relates to the technical field of batteries, and in particular, to a housing assembly, a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and service life. However, when the battery cell is manufactured, a pole terminal is fixed onto the housing by riveting and flanging. In this process, it is difficult to form the post terminal by flanging, and the reliability of the post terminal after flanging is poor.

### SUMMARY

Embodiments of the present application provide a housing assembly, a battery cell, a battery, and an electric device, which can effectively reduce the forming difficulty of the flanging of the post terminal and improve the reliability of the post terminal after flanging.

In a first aspect, the embodiments of the present application provide a housing assembly, including: a housing, where the housing is provided with a via; and a post terminal, where the post terminal includes a main body part, a connecting part, and a bent part. The main body part is located on an inner side of the housing, the connecting part is provided in the via in a penetrating manner and connects the main body part and the bent part, the bent part is provided with an end part proximal to the connecting part, and a recess is formed in one side of the end part proximal to the housing.

In the above technical solutions, the post terminal is configured to include the main body part, the connecting part, and the bent part, the end part of the bent part proximal to the connecting part is provided with the recess, and the recess is located on one side of the end part proximal to the housing; when the post terminal is riveted and flanged to form the bent part and the connecting part, the recess can reduce the impact of material extrusion on the bending of the post terminal to form the bent part, and provide a guiding effect, which can reduce the difficulty in forming the bent part by the post terminal. Meanwhile, the recess can form a relatively small bending angle between the bent part and the connecting part, that is, the bent part can be nearly parallel to the housing, which is conducive to improving the clamping force of the bent part on the sealing member in the via and improving the reliability of the battery cell.

In some embodiments of the present application, a depth dimension of the recess is T, and a thickness dimension of the bent part is H, where 0 < T/H ≤ 0.7. In the technical solutions, the ratio of the depth dimension of the recess to the thickness dimension of the bent part is set to be less than or equal to 0.7, such that the recess has an appropriate depth, which can effectively reduce the difficulty of the riveting and flanging of the post terminal, and enable the post terminal to have a reliable strength after riveting and flanging, thereby improving the reliability of the post terminal.

In some embodiments of the present application, the housing is provided with a first wall, the via is formed in the first wall, the main body part and the connecting part define an accommodating groove in an enclosing manner, and taking a reference plane perpendicular to the first wall, a projection of the recess on the reference plane is located within a projection of the accommodating groove on the reference plane.

In the above technical solutions, taking the reference plane perpendicular to the first wall, the projection of the recess on the reference plane is located within the projection of the accommodating groove on the reference plane. This structure can enable the cover plate to compensate for the strength reduction caused by forming the recess in the bent part after being mounted in the accommodating groove, which is conducive to improving strength at the position where the end part of the bent part is located, thereby improving the structural stability of the housing assembly.

In some embodiments of the present application, the housing assembly further includes a sealing member. The sealing member sleeves the connecting part and is partially located between the bent part and the housing. In the technical solutions, the bent part formed during the riveting and flanging of the post terminal can clamp the sealing member on the housing, such that the sealing member can seal the gap between the via and the connecting part, thereby reducing the risk of leakage of the housing assembly.

In some embodiments of the present application, the recess is in a shape of one of a polygon, a circular arc polygon, and an arc. In the technical solutions, the recess is configured to be in the shape of one of a polygon, a circular arc polygon, and an arc, such that the recess may have a plurality of shapes, and thus a plurality of forming methods may be added, thereby reducing the forming difficulty.

In a second aspect, the embodiments of the present application provide a battery cell, including: the housing assembly as described above. In the technical solutions, the use of the above housing assembly can reduce the forming difficulty of the riveting and flanging of the post terminal, which is conducive to forming the bent part with a relatively thick dimension, thereby improving the connection reliability of the post terminal and the housing, and thus improving the reliability of the battery cell.

In some embodiments of the present application, the main body part and the connecting part define an accommodating groove in an enclosing manner, the battery cell further includes a cover plate, the cover plate lids the accommodating groove, and a welded part is formed between the other side of the end part distal to the housing and the cover plate.

In the above technical solutions, by providing the accommodating groove, the weight of the post terminal can be reduced, which is conducive to improving the energy density of the battery cell. By lidding the accommodating groove with the cover plate, the cover plate can replace the post terminal to be welded to a component such as an external conductor or a busbar, which reduces the probability of the post terminal disengaging from a conductive part of an electrode assembly, and is conducive to improving the reliability of the battery cell. In addition, the recess is formed in one side of the end part of the bent part, and the welded part is formed between the other side and the cover plate. Since the recess can improve the quality of the riveting and flanging of the post terminal, the forming quality of the bent part is relatively high. When the end part of the bent part is welded to the cover plate, it is conducive to improving the welding forming quality of the welded part.

In some embodiments of the present application, the housing is provided with a first wall, the via is formed in the first wall, and taking a reference plane perpendicular to the first wall, a projection of the recess on the reference plane is located within a projection of the cover plate on the reference plane.

In the above technical solutions, taking the reference plane perpendicular to the first wall, the projection of the recess on the reference plane is located within the projection of the cover plate on the reference plane. This structure can enable the cover plate to reinforce the bent part at a position corresponding to the recess, thereby further improving strength at the position where the end part of the bent part is located, and further improving the structural stability of the housing assembly.

In some embodiments of the present application, the main body part is provided with a through hole, the through hole is in communication with the accommodating groove, the battery cell includes an electrode assembly, the electrode assembly is disposed in the housing and provided with a conductive part, the conductive part is provided in the through hole in a penetrating manner, and a part of the conductive part located in the accommodating groove is electrically connected to the main body part or the connecting part.

In the above technical solutions, the accommodating groove can accommodate a part of the conductive part, and a part of the conductive part passing through the through hole can be disposed in the accommodating groove, thereby reducing the volume occupied by the conductive part in the housing, saving the space in the housing, facilitating the arrangement of the electrode assembly with a larger dimension, and further improving the energy density of the battery cell.

In a third aspect, the embodiments of the present application provide a battery, including the battery cell as described above. In the technical solutions, the use of the above battery cell can improve the reliability of the entire battery, which is conducive to improving the use performance of the battery and extending the service life.

In a fourth aspect, the embodiments of the present application provide an electric device, including the battery cell or the battery as described above. In the technical solutions, since the battery cell and the battery described above have high reliability, it is conducive to improving the reliability of the electric device, improving the use performance of the battery, and extending the service life.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of the structure of a battery according to some embodiments of the present application;
FIG. 3 is a schematic structural diagram of a battery cell according to some embodiments of the present application;
FIG. 4 is a top view of a battery cell according to some embodiments of the present application;
FIG. 5 is a schematic cross-sectional view of FIG. 4 along line A-A;
FIG. 6 is a partial enlarged schematic diagram of I in FIG. 5;
FIG. 7 is a partial schematic diagram of the interior of a battery cell according to some embodiments of the present application;
FIG. 8 is a schematic structural diagram of a post terminal without riveting and flanging according to some embodiments of the present application; and
FIG. 9 illustrates several schematic structural diagrams of a recess in a post terminal according to some embodiments of the present application.

Reference numerals: 1000. vehicle; 100. battery; 10. case; 11. first case body; 12. second case body; 20. battery cell; 21. housing assembly; 211. housing; 2111. first wall; 211a. via; 212. post terminal; 201. main body part; 201a. through hole; 202. connecting part; 203. bent part; 204. extension part; 212a. recess; 212b. accommodating groove; 213. sealing member; 214. cover plate; 215. upper plastic member; 216. welded part; 22. electrode assembly; 221. conductive part; 200. controller; 300. motor; X. first direction; Y. second direction; Z. third direction; W. fourth direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. The battery generally includes a case used for encapsulating one or a plurality of battery cells or a plurality of battery module groups. The case can prevent liquid or other foreign matter from affecting the charging or discharging of the battery cells.

The battery cell includes a shell, an electrode assembly, and an electrolyte, and the shell is configured to accommodate the electrode assembly and the electrolyte. The electrode assembly consists of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together.

The material of the separator may be polypropylene (PP), polyethylene (PE), or the like. In addition, the electrode assembly may be of a winding structure or a stacking structure, but the embodiments of the present application are not limited thereto.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and cycle service life.

The utility model inventors found that in a common power battery, a housing assembly of a battery cell includes a housing, a post terminal, an upper plastic, and a seal ring, and the post terminal clamps the upper plastic and the seal ring on the housing by riveting and flanging, such that the seal ring is compressed to ensure the sealing performance. To ensure that the post terminal can clamp the upper plastic and the seal ring by riveting and flanging, the greater the thickness of the flange of the post terminal, the better the clamping effect. However, the thicker the flange, the stronger the deformation resistance of the post terminal, and the more difficult the molding; meanwhile, the reliability of the flange of the post terminal is also affected, thereby affecting the reliability of the battery cell.

Based on the above considerations, to solve the problem that the formation of a thick flange on the post terminal is relatively difficult and that the post terminal exhibits poor reliability after flanging, the utility model inventors design a housing assembly, including a housing and a post terminal. The housing is provided with a via; the post terminal includes a main body part, a connecting part, and a bent part; the main body part is located on the inner side of the housing, the connecting part is provided in the via in a penetrating manner and connects the main body part and the bent part, the bent part is located on the outer side of the housing, the bent part is provided with an end part proximal to the connecting part, and a recess is formed in one side of the end part proximal to the housing.

In the housing assembly with such a structure, the post terminal is configured to include a main body part, a connecting part, and a bent part. The end part of the bent part proximal to the connecting part is provided with a recess, and the recess is located on one side of the end part proximal to the housing. When the post terminal is riveted and flanged to form the bent part and the connecting part, the recess can reduce the impact of material extrusion on the bending of the post terminal to form the bent part, and reduce the difficulty in forming the bent part by the post terminal. Meanwhile, the recess can form a relatively small bending angle between the bent part and the connecting part, that is, the bent part can be nearly parallel to the housing, which can improve the clamping effect of the bent part on the sealing member and is conducive to improving the reliability of the battery cell.

The battery disclosed in the embodiments of the present application may, but is not limited to, be used in electric devices such as vehicles, ships, or aircraft. The battery cell, the battery, and the like disclosed in the present application may be assembled into a power system of the electric device. This helps increase the application range of the battery cell, the battery, and the like within the electric device.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

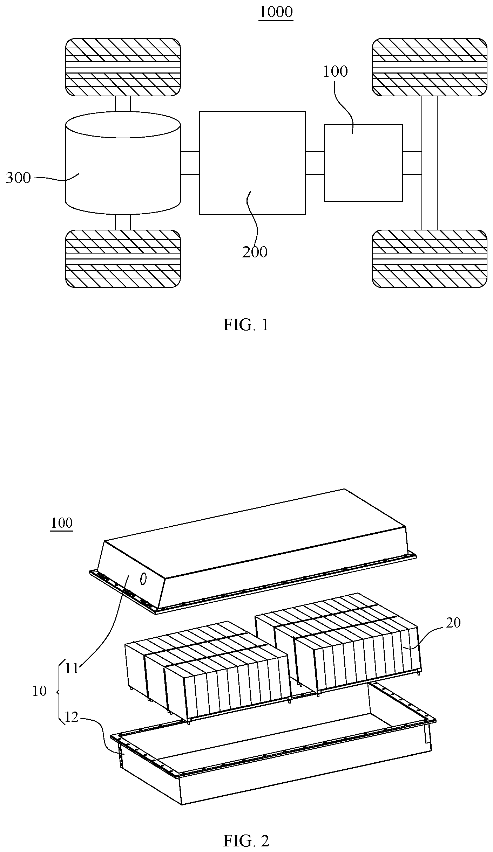

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of the structure of a battery 100 according to some embodiments of the present application. The battery 100 includes a case 10 and a plurality of battery cells 20. The battery cells 20 are configured to be accommodated in the case 10. The case 10 is configured to provide an assembly space for the battery cells 20, and the case 10 may be of various structures. In some embodiments, the case 10 may include a first case body 11 and a second case body 12. The first case body 11 and the second case body 12 are mutually lidded with each other. The first case body 11 and the second case body 12 jointly define an assembly space for accommodating the battery cells 20. The second case body 12 may be of a hollow structure with one end open, and the first case body 11 may be of a plate-shaped structure. The first case body 11 lids the open side of the second case body 12, such that the first case body 11 and the second case body 12 jointly define an assembly space; the first case body 11 and the second case body 12 may also both be of a hollow structure with one side open, and the open side of the first case body 11 lids the open side of the second case body 12. Certainly, the case 10 formed by the first case body 11 and the second case body 12 may be in various shapes, such as a cylinder and a rectangular parallelepiped.

In the battery 100, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection among the plurality of battery cells 20.

Referring to FIG. 2, FIG. 2 is an exploded view of a battery 100 according to some embodiments of the present application. The battery 100 includes a plurality of rows of battery cells 20, the plurality of rows of battery cells 20 are arranged in the length direction of the case 10, and each row of battery cells 20 includes a plurality of battery cells 20 arranged in the width direction of the case 10; alternatively, the plurality of rows of battery cells 20 are arranged in the width direction of the case 10, and each row of battery cells 20 includes a plurality of battery cells 20 arranged in the length direction of the case 10.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes. Illustratively, in FIG. 2, the battery cell 20 is in the shape of a rectangular parallelepiped.

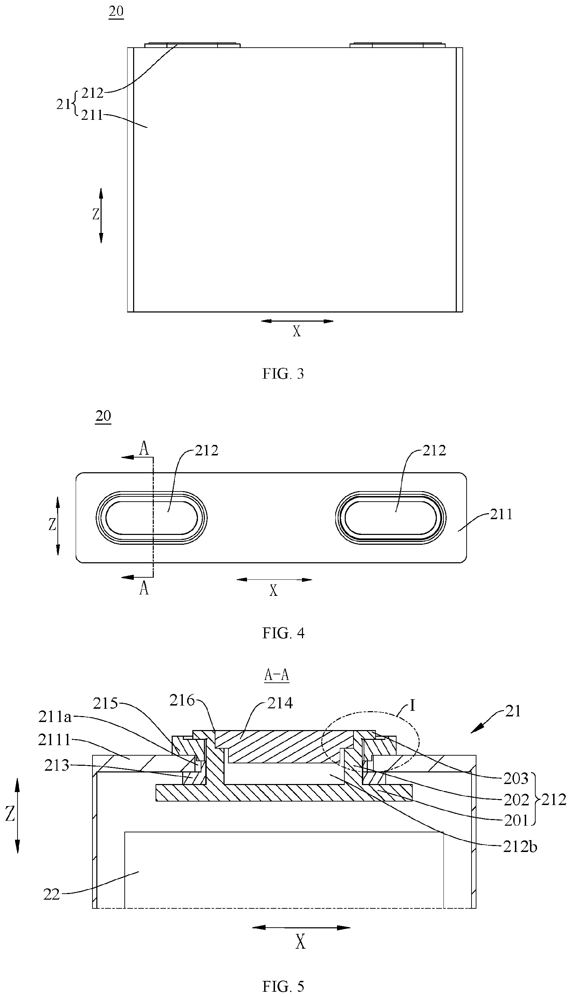

According to some embodiments of the present application, referring to FIGs. 3 to 6, the embodiments of the present application provide a housing assembly 21, including a housing 211 and a post terminal 212. The housing 211 is provided with a via 211a. The post terminal 212 includes a main body part 201, a connecting part 202, and a bent part 203; the main body part 201 is located on the inner side of the housing 211, the connecting part 202 is provided in the via 211a in a penetrating manner and connects the main body part 201 and the bent part 203, the bent part 203 is located on the outer side of the housing 211, the bent part 203 is provided with an end part proximal to the connecting part 202, and a recess 212a is formed in one side of the end part proximal to the housing.

It can be understood that the main body part 201 is located on the inner side of the housing 211, the bent part 203 is located on the outer side of the housing 211, and the main body part 201 and the bent part 203 cooperate with each other to fix the post terminal 212 onto the housing 211, thereby reducing the probability that the post terminal 212 disengages from the housing 211. Illustratively, referring to FIG. 5, the main body part 201 and the bent part 203 may be located at both ends of a housing wall 2111 of the housing 211 in a third direction Z.

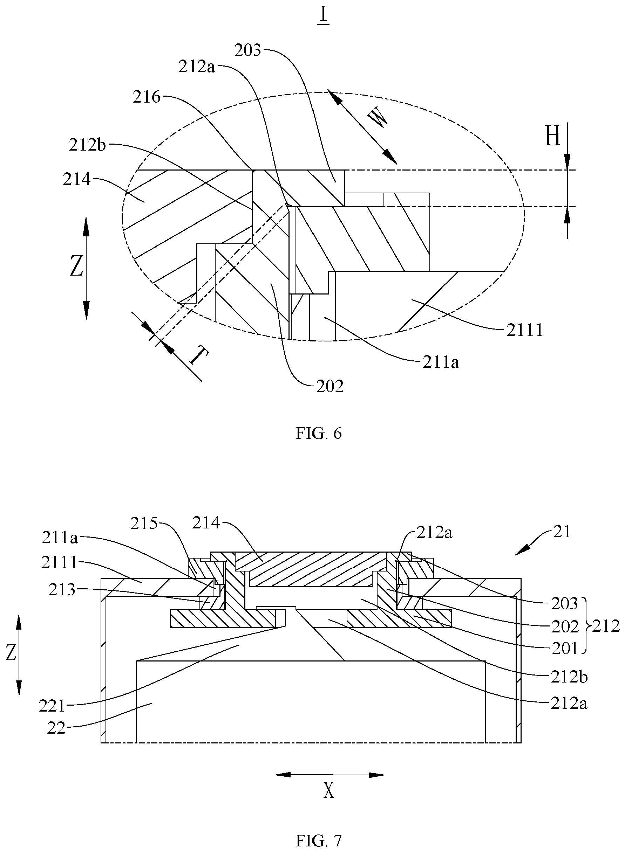

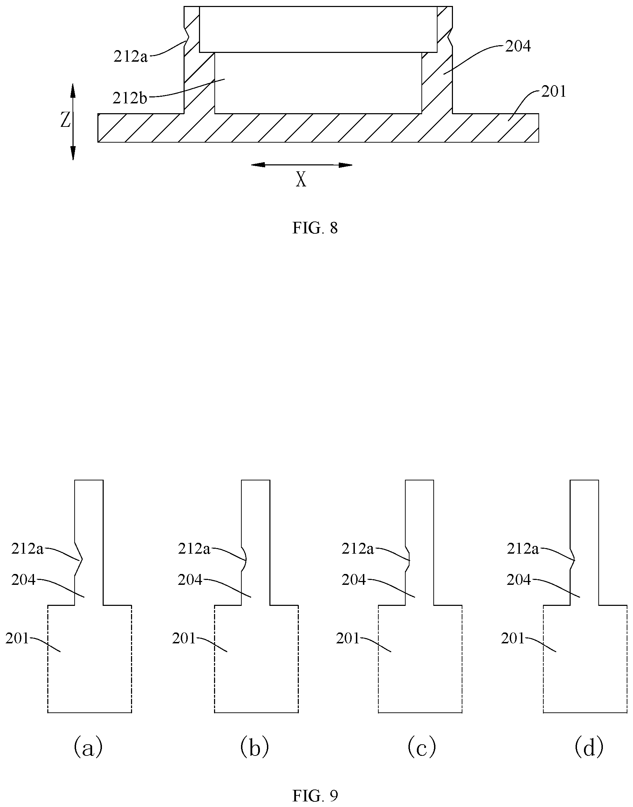

The recess 212a may refer to a notch-like structure (referring to FIG. 6) that is recessed inward. For example, the recess 212a may be a concave rib. Referring to FIGs. 8 and 9, when the post terminal 212 is not subjected to riveting and flanging, the post terminal 212 may include a main body part 201 and an extension part 204. The extension part 204 is disposed on the main body part 201, and a recess 212a may be formed in the outer side of the extension part 204 by a rolling member (for example, a hob). When the post terminal 212 passes through a part of the via 211a for riveting and flanging, the extension part 204 is provided in the via 211a in a penetrating manner. Since the recess 212a can remove a part of the material of the post terminal 212, resistance caused by material extrusion is reduced during the riveting and flanging of the post terminal 212, thereby providing a guiding effect during the riveting and flanging of the post terminal 212 and reducing the difficulty of the riveting and flanging of the post terminal 212. This enables the extension part 204 to bend more easily under the stamping action of a stamping head to form the bent part 203 and the connecting part 202, reducing the forming difficulty and improving operating efficiency. In addition, since the difficulty of the riveting and flanging of the post terminal 212 is reduced, the post terminal 212 may be configured to form the bent part 203 with a relatively large thickness, and the bent part 203 with a relatively large thickness can provide a relatively large clamping force, thereby improving the connection reliability between the post terminal 212 and the housing 211.

In the above technical solutions, the post terminal 212 is configured to include the main body part 201, the connecting part 202, and the bent part 203, the end part of the bent part 203 proximal to the connecting part 202 is provided with the recess 212a, and the recess 212a is located on one side of the end part proximal to the housing 211; when the post terminal 212 is riveted and flanged to form the bent part 203 and the connecting part 202, the recess 212a can reduce the impact of material extrusion on the bending of the post terminal 212 to form the bent part 203, and provide a guiding effect, which can reduce the difficulty in forming the bent part 203 by the post terminal 212. Meanwhile, the recess 212a can form a relatively small bending angle between the bent part 203 and the connecting part 202, that is, the bent part 203 can be nearly parallel to the housing 211, which is conducive to improving the clamping force of the bent part 203 on the sealing member 213 in the via 211a and improving the reliability of the battery cell 20.

In some embodiments of the present application, referring to FIG. 6, the depth dimension of the recess 212a is T, and the thickness dimension of the bent part 203 is H, where 0 < T/H ≤ 0.7.

The depth dimension T of the recess 212a may refer to a dimension in a fourth direction W in FIG. 6, and the thickness dimension H of the bent part 203 may refer to a dimension in the third direction Z in FIG. 6. T/H may be, but is not limited to, 0.1, 0.15, 0.18, 0.2, 0.23, 0.27, 0.3, 0.33, 0.36, 0.4, 0.44, 0.47, 0.5, 0.55, 0.58, 0.6, 0.62, 0.66, 0.68, 0.7, or the like.

If the ratio of T/H is greater than 0.7, the depth of the recess 212a is relatively large, and a relatively large amount of material is removed from the end part of the bent part 203, which easily weakens the strength of the bent part 203. After the riveting and flanging of the post terminal 212, the strength between the bent part 203 and the connecting part 202 tends to be insufficient, resulting in a relatively high probability of fracture, thereby affecting the reliability of the post terminal 212.

In the above technical solutions, the ratio of the depth dimension of the recess 212a to the thickness dimension of the bent part 203 is set to be less than or equal to 0.7, such that the recess 212a has an appropriate depth, which can effectively reduce the difficulty of the riveting and flanging of the post terminal 212, and enable the post terminal 212 to have a reliable strength after riveting and flanging, thereby improving the reliability of the post terminal 212.

In some embodiments of the present application, referring to FIG. 6, the housing 211 is provided with a first wall 2111, the via 211a is formed in the first wall 2111, the main body part 201 and the connecting part 202 define an accommodating groove 212b in an enclosing manner, and taking a reference plane perpendicular to the first wall 2111, the projection of the recess 212a on the reference plane is located within the projection of the accommodating groove 212b on the reference plane.

Since the recess 212a is formed in the end part of the bent part 203 proximal to the connecting part 202, the recess 212a affects strength at a position where the end part of the bent part 203 is located; as the accommodating groove 212b may be configured to mount a cover plate 214, by positioning the projection of the recess 212a on the reference plane within the projection of the accommodating groove 212b on the reference plane, that is, in a first direction X, the recess 212a can directly face the side wall of the accommodating groove 212b, the cover plate 214 can enhance the strength after being fitted into the accommodating groove 212b, which compensates for the strength reduction caused by forming the recess 212a in the bent part 203 and can improve structural stability of the housing assembly 21.

In the above technical solutions, taking the reference plane perpendicular to the first wall 2111, the projection of the recess 212a on the reference plane is located within the projection of the accommodating groove 212b on the reference plane. This structure can enable the cover plate 214 to compensate for the strength reduction caused by forming the recess 212a in the bent part 203 after being mounted in the accommodating groove 212b, which is conducive to improving strength at the position where the end part of the bent part 203 is located, thereby improving the structural stability of the housing assembly 21.

In some embodiments of the present application, referring to FIG. 5, the housing assembly 21 further includes a sealing member 213. The sealing member 213 sleeves the connecting part 202, and is partially located between the bent part 203 and the housing 211.

In the above technical solutions, the bent part 203 formed during the riveting and flanging of the post terminal 212 can clamp the sealing member 213 on the housing 211, such that the sealing member 213 can seal the gap between the via 211a and the connecting part 202, thereby reducing the risk of leakage of the housing assembly 21.

In some embodiments of the present application, the sealing member 213 may be, but is not limited to, a rubber seal ring, a polyurethane seal ring, or the like.

In some embodiments of the present application, referring to FIG. 9, the recess 212a is in the shape of one of a polygon, a circular arc polygon, and an arc. The polygon may include, but is not limited to, a triangle, a quadrangle, a pentagon, and the like. The recess 212a may be in the shape of an arc. The circular arc polygon may include, but is not limited to, a circular arc triangle, a circular arc quadrangle, a circular arc pentagon, and the like.

In the above technical solutions, the recess 212a is configured to be in the shape of one of a polygon, a circular arc polygon, and an arc, such that the recess 212a may have a plurality of shapes, and thus a plurality of forming methods may be added, thereby reducing the forming difficulty.

In a second aspect, referring to FIG. 5, the embodiments of the present application provide a battery cell 20, including the housing assembly 21.

In the battery cell 20, the post terminal 212 may be sleeved with the sealing member 213 and an upper plastic member 215. By acting on the extension part 204 of the post terminal 212 through a stamping member, the extension part 204 is bent towards one side proximal to the edge of the via 211a at the recess 212a, and the bent part 203 formed by the extension part 204 can clamp the sealing member 213 and the upper plastic member 215 on the housing 211, thereby completing the assembly of the post terminal 212, the sealing member 213, and the upper plastic member 215 on the housing 211.

In the above technical solutions, the use of the above housing assembly 21 can reduce the forming difficulty of the riveting and flanging of the post terminal 212, which is conducive to forming the bent part 203 with a relatively thick dimension, thereby improving the connection reliability of the post terminal 212 and the housing 211, and thus improving the reliability of the battery cell 20.

In some embodiments of the present application, referring to FIGs. 5 and 7, the main body part 201 and the connecting part 202 define an accommodating groove 212b in an enclosing manner, the battery cell 20 further includes a cover plate 214, the cover plate 214 lids the accommodating groove 212b, and a welded part 216 is formed between the other side of the end part distal to the housing 211 and the cover plate 214.

The accommodating groove 212b can reduce the weight of the post terminal 212, thereby reducing the weight of the entire housing assembly 21 and improving the energy density of the battery cell 20.

When the battery cell 20 needs to be connected to a component such as an external conductor or a busbar, the cover plate 214 may be welded to a component such as an external conductor or a busbar by providing the cover plate 214 and lidding the accommodating groove 212b with the cover plate 214, such that the post terminal 212 can be electrically connected to an external conductor or a busbar. Since the post terminal 212 needs to be welded to a conductive part 221 of an electrode assembly 22, the cover plate 214 can separate the post terminal 212 from the conductive part 221. When the cover plate 214 is welded to a component such as an external conductor or a busbar, the probability of a relatively large temperature rise of the post terminal 212 can be reduced, thereby reducing the probability of fusing in a tab 212 and the conductive part 221, and improving the connection reliability of the post terminal 212 and the conductive part 221.

In the above technical solutions, by providing the accommodating groove 212b, the weight of the post terminal 212 can be reduced, which is conducive to improving the energy density of the battery cell 20. By lidding the accommodating groove 212b with the cover plate 214, the cover plate 214 can replace the post terminal 212 to be welded to a component such as an external conductor or a busbar, which reduces the probability of the post terminal 212 disengaging from the conductive part 221 of the electrode assembly 22, and is conducive to improving the reliability of the battery cell 20. In addition, the recess 212a is formed in one side of the end part of the bent part 203, and the welded part 216 is formed between the other side and the cover plate 214. Since the recess 212a can improve the quality of the riveting and flanging of the post terminal 212, the forming quality of the bent part 203 is relatively high. When the end part of the bent part 203 is welded to the cover plate 214, it is conducive to improving the welding forming quality of the welded part 216.

In some embodiments of the present application, referring to FIG. 6, the housing 211 is provided with a first wall 2111, the via 211a is formed in the first wall 2111, and taking a reference plane perpendicular to the first wall 2111, the projection of the recess 212a on the reference plane is located within the projection of the cover plate 214 on the reference plane.

Referring to FIG. 6, that is, in the first direction X, the recess 212a can directly face the cover plate 214, and the cover plate 214 can abut against the groove wall of the accommodating groove 212b corresponding to the recess 212a, enabling a better strength enhancement effect, achieving a better effect of compensating for the strength reduction caused by forming the recess 212a in the bent part 203, and further improving the structural stability of the housing assembly 21.

In the above technical solutions, taking the reference plane perpendicular to the first wall 2111, the projection of the recess 212a on the reference plane is located within the projection of the cover plate 214 on the reference plane. This structure can enable the cover plate 214 to reinforce the bent part 203 at a position corresponding to the recess 212a, thereby further improving strength at the position where the end part of the bent part 203 is located, and further improving the structural stability of the housing assembly 21.

In some embodiments of the present application, referring to FIG. 7, the main body part 201 is provided with a through hole 201a, and the through hole 201a is in communication with the accommodating groove 212b; the battery cell 20 includes an electrode assembly 22, the electrode assembly 22 is disposed in the housing 211 and provided with a conductive part 221, the conductive part 221 is provided in the through hole 201a in a penetrating manner, and a part of the conductive part 221 located in the accommodating groove 212b is electrically connected to the main body part 201 or the connecting part 202.

The conductive part 221 may refer to a conductive component connecting the electrode assembly 22 and the post terminal 212. Specifically, the conductive part 221 may be understood as a tab. The part of the conductive part 221 located in the accommodating groove 212b may be electrically connected to the main body part 201, or the part of the conductive part 221 located in the accommodating groove 212b is electrically connected to the connecting part 202.

In the above technical solutions, the accommodating groove 212b can accommodate a part of the conductive part 221, and a part of the conductive part 221 passing through the through hole 201a can be disposed in the accommodating groove 212b, thereby reducing the volume occupied by the conductive part 221 in the housing 211, saving the space in the housing 211, facilitating the arrangement of the electrode assembly 22 with a larger dimension, and further improving the energy density of the battery cell 20.

In a third aspect, the embodiments of the present application provide a battery 100, including the battery cell 20 as described above.

In the above technical solutions, the use of the above battery cell 20 can improve the reliability of the entire battery 100, which is conducive to improving the use performance of the battery 100 and extending the service life.

In a fourth aspect, the embodiments of the present application provide an electric device, including the battery cell 20 or the battery 100 as described above.

In the above technical solutions, since the battery cell 20 and the battery 100 described above have high reliability, it is conducive to improving the reliability of the electric device, improving the use performance of the battery 100, and extending the service life.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A housing assembly, comprising:
a housing, wherein the housing is provided with a via; and
a post terminal, wherein the post terminal comprises a main body part, a connecting part, and a bent part, wherein the main body part is located on an inner side of the housing, the connecting part is provided in the via in a penetrating manner and connects the main body part and the bent part, the bent part is located on an outer side of the housing, the bent part is provided with an end part proximal to the connecting part, and a recess is formed in one side of the end part proximal to the housing.

2. The housing assembly according to claim 1, wherein a depth dimension of the recess is T, and a thickness dimension of the bent part is H, wherein 0 < T/H ≤ 0.7.

3. The housing assembly according to claim 1, wherein the housing is provided with a first wall, the via is formed in the first wall, the main body part and the connecting part define an accommodating groove in an enclosing manner, and taking a reference plane perpendicular to the first wall, a projection of the recess on the reference plane is located within a projection of the accommodating groove on the reference plane.

4. The housing assembly according to any one of claims 1 to 3, wherein the housing assembly further comprises a sealing member, the sealing member sleeving the connecting part and being partially located between the bent part and the housing.

5. The housing assembly according to any one of claims 1 to 4, wherein the recess is in a shape of one of a polygon, a circular arc polygon, and an arc.

6. A battery cell, comprising: the housing assembly according to claims 1 to 5.

7. The battery cell according to claim 6, wherein the main body part and the connecting part define an accommodating groove in an enclosing manner, the battery cell further comprises a cover plate, the cover plate lids the accommodating groove, and a welded part is formed between the other side of the end part distal to the housing and the cover plate.

8. The battery cell according to claim 7, wherein the housing is provided with a first wall, the via is formed in the first wall, and taking a reference plane perpendicular to the first wall, a projection of the recess on the reference plane is located within a projection of the cover plate on the reference plane.

9. The battery cell according to claim 7, wherein the main body part is provided with a through hole, the through hole is in communication with the accommodating groove, the battery cell comprises an electrode assembly, the electrode assembly is disposed in the housing and provided with a conductive part, the conductive part is provided in the through hole in a penetrating manner, and a part of the conductive part located in the accommodating groove is electrically connected to the main body part or the connecting part.

10. A battery, comprising the battery cell according to any one of claims 6 to 7.

11. An electric device, comprising the battery cell according to any one of claims 6 to 7 or the battery according to claim 10.
